**Europäisches Patentamt**

**European Patent Office**

**Office européen des brevets**

(19)

(11) Veröffentlichungsnummer: **0 118 711**
**A1**

(12) # EUROPÄISCHE PATENTANMELDUNG

(21) Anmeldenummer: **84100937.6**

(22) Anmeldetag: **31.01.84**

(51) Int. Cl.³: **G 01 B 17/00**

(30) Priorität: **10.02.83 DE 3304520**

(43) Veröffentlichungstag der Anmeldung:
**19.09.84 Patentblatt 84/38**

(84) Benannte Vertragsstaaten:
**CH DE FR GB IT LI**

(71) Anmelder: **Gebhard Balluff Fabrik feinmechanischer Erzeugnisse GmbH & Co.**
**Gartenstrasse 21**
**D-7303 Neuhausen a.d.F.(DE)**

(72) Erfinder: **Vinnemann, Antonius, Dr.**
**Am Bopserweg 11**
**D-7000 Stuttgart 1(DE)**

(74) Vertreter: **Hoeger, Stellrecht & Partner**
**Uhlandstrasse 14c**
**D-7000 Stuttgart 1(DE)**

(54) **Ultraschall-Wegmesser.**

(57) Die Erfindung betrifft einen magnetostriktiven Ultraschall-Wegmesser, bei dem für die Bestimmung einer Referenzstrecke (L) zwei an ein Rohr (14) aus magnetostriktivem Material angekoppelte Magnete (22,24) vorgesehen sind, die über ein Verbindungselement miteinander verbunden sind, welches einen geringen Wärmedehnungskoeffizienten aufweist. Vorzugsweise ist als Verbindungselement eine Quarzplatte (20) vorgesehen, so daß die Referenzstrecke (L) mit hoher Genauigkeit aufrechterhalten wird. Durch den Einsatz zweier Referenzmagnete (22, 24) wird ferner erreicht, daß Temperaturdriften des Ultraschall-Aufnehmers (16) und der Meßschaltung ohne Einfluß die Genauigkeit des Meßergebnisses bleiben.

## Fig. 1

EP 0 118 711 A1

0118711

Ultraschall-Wegmesser

Die Erfindung betrifft einen Ultraschall-Wegmesser zur
linearen Wegmessung mit einem Rohr aus magneto-striktivem
Material, mit einem bezüglich des Rohres beweglichen
ersten Magneten zur Erzeugung von als Positionssignale
dienenden Ultraschall-Impulsen in Abhängigkeit von
längs des Rohres entlanglaufenden elektrischen Impulsen
aus einem Impulsgenerator, mit einem an einem ersten
Referenzpunkt bezüglich des Rohres feststehenden, zweiten Magneten zur Erzeugung von als Referenzsignale
dienenden Ultraschall-Impulsen, mit einem an das Rohr
angekoppelten Ultraschall-Aufnehmer zum Umsetzen der
in dem Rohr erzeugten Positions- und Referenzsignale
in elektrische Signale für eine Meßschaltung und mit
einem einen geringen Wärmedehnungskoeffizienten aufweisenden Verbindungselement, durch welches der feststehende, zweite Magnet mit einem an einem zweiten Referenzpunkt bezüglich des Rohres feststehenden weiteren
Element des Wegmessers verbunden ist.

Ein derartiger Wegmesser wurde in einer früheren Anmeldung der Anmelderin (amtliches Aktenzeichen
P 31 31 455.4) vorgeschlagen. Bei diesem magnetostriktiven Ultraschall-Wegmesser sind der Ultraschall-
Aufnehmer und der feststehende zweite Magnet über ein
temperaturabhängiges Verbindungselement miteinander verbunden, welches insbesondere als Invar-Stab ausgebildet ist, um auf diese Weise einen nahezu konstanten
Abstand zwischen dem feststehenden Magneten und dem
Ultraschall-Aufnehmer zu erreichen und so für eine vorgegebene Strecke eine Referenz-Laufzeit ermitteln zu
können. Dabei sind der Ultraschall-Aufnehmer und der
feststehende Magnet möglichst weit an den Enden des
magnetostriktiven Rohres angeordnet, um eine möglichst
lange Bezugsstrecke und hierdurch eine hohe Meßgenauigkeit zu erreichen.

Es hat sich gezeigt, daß mit Hilfe des früher vorgeschlagenen magnetostriktiven Ultraschall-Wegmessers
durchaus eine Verbesserung der Meßgenauigkeit gegenüber der Meßgenauigkeit bei den bisher verwendeten
Wegmessern dieser Art erreichbar ist (vgl. beispielsweise US-PS 3 898 555), da die temperaturabhängige
Drift der Ultraschall-Geschwindigkeit durch deren Messung auf einer Referenzlänge weitgehend kompensiert
wird, daß aber der Einfluß der Temperaturdrift der
Komponenten der Meßschaltung die maximal erreichbare
Genauigkeit noch immer auf Werte begrenzt, die in
einigen Fällen nicht ausreichend sind.

Ausgehend von dem früheren Vorschlag und der vorstehend
aufgezeigten Problematik liegt der Erfindung die Aufgabe zugrunde, durch Kompensation der Temperaturdrift
der Komponenten der Meßschaltung eine weitere Verbesserung der Meßgenauigkeit zu erreichen.

Diese Aufgabe wird bei einem Ultraschall-Wegmesser der
eingangs beschriebenen Art gemäß der Erfindung dadurch
gelöst, daß als weiteres bezüglich des Rohres feststehendes Element ein dritter Magnet vorgesehen ist
und daß die Meßschaltung derart ausgebildet ist, daß
mit ihrer Hilfe in Abhängigkeit von der Laufzeitdifferenz der Ultraschall-Impulse, die durch einen von dem
Impulsgenerator erzeugten, längs des Rohres entlanglaufenden elektrischen Impuls in den beiden feststehenden
Magneten hervorgerufen werden und zum Ultraschall-Aufnehmer laufen, ein Längendifferenz-Signal erzeugbar ist.

Der entscheidende Vorteil des Ultraschall-Wegmessers
gemäß der Erfindung besteht darin, daß bei der Durchführung zweier Referenzmessungen mit Hilfe der beiden
feststehenden Magnete zur Bestimmung der Laufzeit für
die Referenzstrecke zwischen diesen beiden feststehenden
Magneten und bei der Durchführung einer Positions- bzw.
Längenmessung mit Hilfe eines der feststehenden Magnete
und des beweglichen Magneten zur Bestimmung der Laufzeit für die Meßstrecke zwischen dem beweglichen Magnet
und dem einen feststehenden Magnet Meßwerte erhalten
werden, die von einer Temperaturdrift der Meßschaltung
völlig unabhängig sind.

Die elektrischen Impulse können direkt an das Rohr angelegt werden, das in diesem Fall auch als elektrischer
Leiter für die Impulse dient. Als besonders vorteilhaft
hat es sich jedoch erwiesen, wenn ein besonderer elektrischer Leiter vorgesehen ist, welcher im Inneren des
Rohres verläuft und an den die von dem Impulsgenerator
erzeugten elektrischen Impulse anlegbar sind.

In Ausgestaltung der Erfindung hat es sich als vorteilhaft erwiesen, wenn als Verbindungselement zwischen
den beiden feststehenden Magneten eine Quarzplatte
vorgesehen ist, da die temperaturabhängige Längenänderung $= 5 \times 10^{-8}/°C$ einer solchen Quarzplatte um
etwa zwei Zehnerpotenzen geringer ist als die temperaturabhängige Längenänderung $= 2 \times 10^{-6}/°C$ eines Invar-
Stabes, so daß die beiden feststehenden Magnete relativ
dicht beieinander angeordnet werden können und trotzdem eine höhere Meßgenauigkeit erreicht wird als bei
Verwendung eines Invar-Stabes und einem Abstand von
beispielsweise 2 m zwischen dem Ultraschall-Aufnehmer
und dem einen feststehenden Magneten.

Weitere Einzelheiten und Vorteile der Erfindung werden
nachstehend anhand einer Zeichnung näher erläutert.
Es zeigen:

Fig. 1        eine schematische Seitenansicht einer
              bevorzugten Ausführungsform eines Ultraschall-Wegmessers gemäß der Erfindung und

Fig. 2        einen Querschnitt durch den Ultraschall-
              Wegmesser gemäß Fig. 1 längs der Linie
              2-2 in dieser Figur.

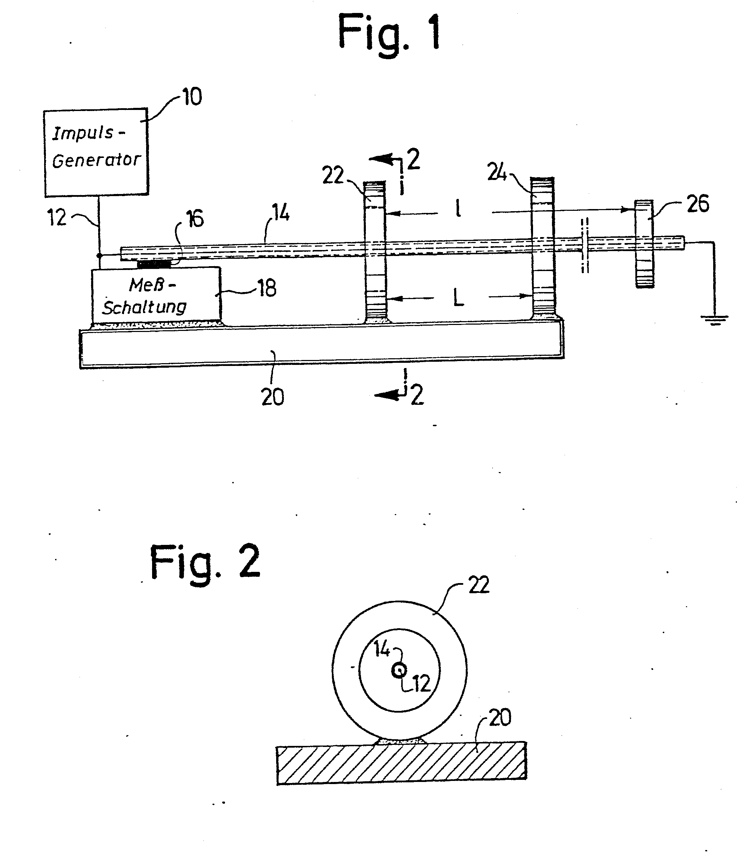

Im einzelnen zeigt Fig. 1 der Zeichnung einen Impulsgenerator 10, mit dessen Hilfe auf einem elektrischen
Leiter 12 elektrische Impulse erzeugbar sind. Der elektrische Leiter 12 ist von einem Rohr 14 aus magneto-
striktivem Material umgeben. Mit dem Rohr 14 ist ein
Ultraschall-Aufnehmer 16 verbunden, der in der Zeichnung
nur schematisch angedeutet ist und der in üblicher Weise
als Wellenwandler ausgebildet sein kann. Ein derartiger,
als Wellenwandler ausgebildeter Ultraschall-Aufnehmer
ist beispielsweise in der eingangs erwähnten US-PS
3 898 555 detailliert beschrieben.

Die elektrischen Ausgangssignale des Aufnehmers 16 werden in einer Meßschaltung 18 ausgewertet. Diese Meßschaltung 18 ist beim Ausführungsbeispiel zusammen mit dem Wellenwandler 16 an einer Quarzplatte 20 befestigt, insbesondere angeklebt, wie dies in der Zeichnung angedeutet ist. Mit der Quarzplatte 20 sind ferner zwei gegenüber dem Rohr 14 feststehende Magnete 22, 24 verbunden, die in einem vorgegebenen Abstand L voneinander angeordnet sind. Die Magnete 22, 24 sind ringförmig ausgebildet und umgeben das Rohr 14, wie dies speziell aus Fig. 2 deutlich wird. Ein weiterer, ringförmiger, das Rohr 14 umgebender Magnet 26 ist relativ zu dem Rohr 14 beweglich. Der Abstand 1 zwischen dem beweglichen Magneten 26 und dem einen der beiden feststehenden Magnete - beim Ausführungsbeispiel dem Magneten 22 - ist die mit dem erfindungsgemäßen Wegmesser zu messende Meßstrecke.

Wenn bei dem erfindungsgemäßen Ultraschall-Wegmesser der Impulsgenerator 10 einen elektrischen Impuls auf dem Leiter 12 erzeugt, dann durchläuft dieser elektrische Impuls den Leiter 12 und löst im Zusammenwirken mit den Magnetfeldern der drei Magnete 22, 24 und 26 in dem magnetostriktiven Rohr 14 jeweils einen mechanischen Torsionsimpuls aus, der jeweils einen Ultraschallimpuls als Folge hat. Da der elektrische Impuls den Leiter 12 nahezu mit Lichtgeschwindigkeit durchläuft, kann für die Praxis davon ausgegangen werden, daß die Torsionsimpulse in dem Rohr 14 an den drei Magneten 22, 24 und 26 gleichzeitig erzeugt werden. Die Ultraschall-Impulse laufen jeweils zu beiden Enden des Rohres 14, so daß am Aufnehmer 16 bzw. an der Meßschaltung 18 nach der Aussendung eines

Impulses des Impulsgenerators 10, wenn man von den Impulsechos an den Rohrenden absieht, nacheinander drei Impulse eintreffen, und zwar zunächst der in Höhe des Magneten 22 erzeugte Impuls, sodann der in Höhe des Magneten 24 erzeugte Impuls und schließlich der in Höhe des Magneten 26 erzeugte Impuls. Der zeitliche Abstand zwischen den beiden ersten Impulsen, der in üblicher Weise mit Hilfe eines mit hoher Taktfrequenz arbeitenden Zählers in der Meßschaltung 18 ermittelt werden kann, entspricht dabei dem räumlichen Abstand L zwischen den Magneten 22 und 24. Ferner entspricht der zeitliche Abstand zwischen dem ersten und dem dritten Impuls dem Abstand l zwischen den Magneten 22 und 26, d.h. der Meßstrecke.

Da bei dem erfindungsgemäßen Ultraschall-Wegmesser mit Hilfe der beiden feststehenden Magneten 22, 24 zwei Referenzsignale erhalten werden, kann eine temperaturabhängige oder alterungsabhängige Drift der Elektronik in der Meßschaltung 18 eliminiert werden. Damit läßt sich der Einfluß von Drifteffekten auf die Genauigkeit der Messung der Wegstrecken l und L ausschalten. Da weiterhin die Quarzplatte 20 sehr alterungsbeständig ist und nur einen extrem niedrigen Wärmedehnungskoeffizienten besitzt, ist außerdem eine hohe Präzision und Konstanz des Abstandes L bzw. der Referenzstrecke gewährleistet, so daß im Ergebnis sehr genaue lineare Wegmessungen ermöglicht werden, insbesondere, wenn man unter Ausnutzung der modernen Halbleiter-Technologie mit hohen Taktfrequenzen arbeitet, wobei die Präzision der Meßergebnisse noch durch eine Mittelwertbildung verbessert werden kann, indem die Meßergebnisse für die Abstände

- 7 -

L bzw. l jeweils in Abhängigkeit von mehreren Ausgangsimpulsen des Impulsgenerators 10 gemessen werden und
indem die dabei erhaltenen Einzelergebnisse dann gemittelt werden.

Aus der vorstehenden Beschreibung wird deutlich, daß
der Einfluß von Drifterscheinungen am Ultraschall-
Aufnehmer und in der Meßschaltung dadurch unterdrückt
wird, daß zwei feststehende Referenzmagnete vorgesehen
sind. Dieses Prinzip lässt sich mit Vorteil auch unabhängig davon anwenden, ob die beiden Referenzmagnete
über ein Verbindungselement mit besonders geringem
Wärmedehnungskoeffizienten verbunden sind oder nicht.
Durch den Einsatz eines solchen Verbindungselementes,
insbesondere eines Quarzstabes oder einer Quarzplatte,
lässt sich  jedoch außerdem noch die temperaturabhängige
Längenänderung der Referenzstrecke auf ein Minimum
reduzieren. Außerdem wird aus der vorstehenden Beschreibung deutlich, daß die Meßschaltung und der
Ultraschall-Aufnehmer nicht auf der die beiden feststehenden Magnete tragenden Quarzplatte befestigt sein
müssen. Andererseits ermöglicht die beim Ausführungsbeispiel gezeigte Ausgestaltung die Schaffung einer
besonders kompakten Baugruppe, was in vielen Fällen
vorteilhaft ist.

Während vorstehend als magnetostriktives Element stets
ein magnetostriktives Rohr verwendet wird, bestünde
grundsätzlich auch die Möglichkeit, stattdessen ein
massives magnetostriktives Element, also beispielsweise einen Stab, zu verwenden. Diese Lösung ist jedoch insofern nachteilig, als hier die inneren
Materialbereiche praktisch nicht an der Signalerzeugung teilnehmen und lediglich eine träge, die Ultraschallimpulse dämpfende Masse bilden.

Patentansprüche
-----------------------------------

1. Ultraschall-Wegmesser zur linearen Wegmessung mit
   einem Rohr aus magneto-striktivem Material, mit
   einem bezüglich des Rohres beweglichen ersten
   Magneten zur Erzeugung von als Positionssignale
   dienenden Ultraschall-Impulsen in Abhängigkeit von
   längs des Rohres entlanglaufenden elektrischen Impulsen aus einem Impulsgenerator, mit einem an einem
   ersten Referenzpunkt bezüglich des Rohres feststehenden, zweiten Magneten zur Erzeugung von als
   Referenzsignale dienenden Ultraschall-Impulsen,
   mit einem an das Rohr angekoppelten Ultraschall-
   Aufnehmer zum Umsetzen der in dem Rohr erzeugten
   Positions- und Referenzsignale in elektrische
   Signale für eine Meßschaltung und mit einem einen
   geringen Wärmedehnungskoeffizienten aufweisenden
   Verbindungselement, durch welches der feststehende,
   zweite Magnet mit einem an einem zweiten Referenzpunkt bezüglich des Rohres feststehenden weiteren
   Element des Wegmessers verbunden ist,
   d a d u r c h   g e k e n n z e i c h n e t,
   daß als weiteres bezüglich des Rohres (14) feststehendes Element ein dritter Magnet (24) vorgesehen ist und daß die Meßschaltung (18) derart
   ausgebildet ist, daß mit ihrer Hilfe in Abhängigkeit von der Laufzeitdifferenz der Ultraschall-
   Impulse, die durch einen von dem Impulsgenerator (10)

- 10 -                    0118711

erzeugten, längs des Rohres entlanglaufenden elektrischen Impuls in den beiden feststehenden Magneten (22,24) hervorgerufen werden und zum Ultraschall-Aufnehmer (16) laufen, ein Längendifferenz-Signal erzeugbar ist.

2. Ultraschall-Wegmesser nach Anspruch 1, dadurch gekennzeichnet, daß ein elektrischer Leiter (12) vorgesehen ist, welcher im Inneren des Rohres (14) verläuft und an den die von dem Impulsgenerator erzeugten elektrischen Impulse anlegbar sind.

3. Ultraschall-Wegmesser nach Anspruch 1 oder 2, dadurch gekennzeichnet, daß als Verbindungselement eine Quarzplatte (10) vorgesehen ist.

4. Ultraschall-Wegmesser nach einem der Ansprüche 1 bis 3, dadurch gekennzeichnet, daß die Magnete (22 bis 26) als ringförmige, das magneto-striktive Rohr (14) umgebende Magnete ausgebildet sind.

Fig. 1

0118711

Fig. 2

Gebhard Balluff GmbH & Co. feinmechanische Erzeugnisse, Gartenstrasse 21, 7303 Neuhausen

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| D,P<br>A | DE-A-3 131 455 (GEBHARD BALLUFF GMBH) | 1-4 | G 01 B 17/00 |
| | --- | | |
| D,A | US-A-3 898 555 (J. TELLERMAN) | | |
| | --- | | |
| A | DE-B-2 833 369 (J. HEIDENHAIN GMBH)<br>* Ansprüche 5, 11; Figur 5; Spalte 8, Zeile 65 - Spalte 9, Zeile 12 * | 3 | |
| | ----- | | |

RECHERCHIERTE SACHGEBIETE (Int. Cl. ³)

G 01 B 17/00

Der vorliegende Recherchenbericht wurde für alle Patentansprüche erstellt.

| Recherchenort | Abschlußdatum der Recherche | Prüfer |
|---|---|---|
| BERLIN | 15-05-1984 | KOEHN G |